# EUROPÄISCHE PATENTSCHRIFT

(11) **EP 4 259 459 B1**
(45) Veröffentlichungstag und Bekanntmachung des Hinweises auf die Patenterteilung: **03.12.2025**
(21) Anmeldenummer: 21830943.3
(22) Anmeldetag: 10.12.2021
(51) Int. Cl.: B60C 11/12, B60C 11/03

(54) **FAHRZEUGLUFTREIFEN**
PNEUMATIC TYRE
PNEUMATIQUE

(30) Priorität: 14.12.2020 DE 102020215798
(43) Veröffentlichungstag der Anmeldung: 18.10.2023
(73) Patentinhaber: Continental Reifen Deutschland GmbH, 30175 Hannover (DE)
(72) Erfinder: VELLINGA-WALLENHAUER, Marieken, 30165 Hannover (DE); BAUER, Claudia, 30165 Hannover (DE); STARKE, Melanie, 30165 Hannover (DE); PANG-JIAN-XIANG, Edwin, 30165 Hannover (DE); KÖTTER, Maik, 30165 Hannover (DE)
(74) Vertreter: Continental Corporation
(86) Internationale Anmeldenummer: PCT/DE2021/200256
(87) Internationale Veröffentlichungsnummer: WO 2022/128022

(56) Entgegenhaltungen:
- EP-A1- 1 157 859
- EP-A1- 1 580 034
- DE-A1- 102017 211 128
- US-A1- 2016 159 161

## Beschreibung

Die Erfindung betrifft einen Fahrzeugluftreifen mit einem Laufstreifen mit zu Schulterblockreihen gehörenden schulterseitigen Blöcken und mit mittleren Blöcken zwischen den schulterseitigen Blöcken, wobei zumindest einige der schulterseitigen Blöcke und/oder zumindest einige der mittleren Blöcke - jeweils in Draufsicht - mit zumindest einem sich unter einem Winkel von bis zu 35° zur axialen Richtung erstreckenden Einschnitt versehen sind, welcher eine Breite von 0,4 mm bis 0,8 mm und an seiner tiefsten Stelle eine Tiefe von mindestens 50% der Profiltiefe aufweist und wobei Mikrorillen angeordnet sind, wobei eine Mikrorille eine Breite von 0,2 mm bis 0,6 mm aufweist, wobei wenigstens einer der Blöcke ein Mikrorillen-Element aus wenigstens vier derart dendritenartig angeordneten Mikrorillen nach Art eines Schneekristalles aufweist, dass die wenigstens vier Mikrorillen sternförmig auf den Mittelpunkt des Mikrorillen-Elementes ausgerichtet sind.

Der "Einschnitt" wird fachüblich auch als "Feineinschnitt" bezeichnet.

Es ist bekannt, bei für den Wintereinsatz vorgesehenen Fahrzeugluftreifen die Blöcke des Laufstreifens gleichmäßig mit einer Vielzahl von parallel zueinander verlaufenden, sehr seichten Mikrorillen zu "überziehen". Im Gegensatz zu herkömmlichen in den Blöcken ausgebildeten Einschnitten schließen sich derartige Mikrorillen infolge ihrer geringen Tiefe nicht unter den beim Abrollen auftretenden Kräften. Die Mikrorillen verlaufen in Draufsicht üblicherweise in axialer Richtung oder unter einem von der axialen Richtung um bis zu 90° abweichenden Winkel und weisen ähnliche Längen wie die Einschnitte auf. Die durch die Mikrorillen gebildete Oberflächenstruktur trägt bei neuem Reifen, insbesondere bei sogenannten "Softcompound"-Winterreifen, dazu bei, den sich beim Bremsen und beim Beschleunigen auf schnee- und/oder eisbedeckten Fahrbahnen bildenden Wasserfilm von der Oberfläche der Blöcke aufzunehmen, abzuleiten und den Laufstreifen derart zu entwässern. Bei einer Umgebungstemperatur knapp unter 0°C und langer, intensiver Sonneneinstrahlung schmilzt beispielsweise besonders viel Eis und/oder Schnee, sodass sich ein hoher Wasserfilm bildet. Zum Fahren auf einer solchen Fahrbahn ist es vorteilhaft, wenn eine Aufnahme und Ableitung des Wasserfilms über Mikrorillen gewährleistet ist und gleichzeitig die Kontaktfläche der Profilblöcke bei neuen Reifen ausreichend groß ist, um eine gute Kraftübertragung vom Reifen auf den Untergrund sicherzustellen. Ein derartiger Fahrzeugluftreifen ist beispielsweise aus der DE 10 2017 211 128 A1 bekannt, bei dem zusätzlich zu den Einschnitten Mikrorillen vorgesehen sind. Die Mikrorillen verlaufen jedoch parallel zu den Einschnitten.

Ein Fahrzeugluftreifen der eingangs genannten Art ist beispielsweise aus der EP 1 580 034 A1 bekannt. Gemäß einem Ausführungsbeispiel weist der Fahrzeugluftreifen einen Laufstreifen mit Blöcken auf, welche jeweils derart mit einem Einschnittnetz aus regelmäßigen Sechsecken versehen sind, dass in axialer Richtung aneinander anschließende Seiten der Sechsecke als sich in axialen Richtung erstreckende Einschnitte bzw. jede Seite eines Sechsecks als ein sich zur axialen Richtung unter einem Winkel von 30° erstreckender Einschnitt aufgefasst werden kann. Der Einschnitt weist eine Breite von 0,4 mm bis 0,8 mm und eine Tiefe von 100% der Profiltiefe, welche beispielsweise 7,0 mm oder 8,0 mm beträgt, auf. Ferner ist der Block innerhalb jedes Sechsecks mit einem Mikrorillen-Element versehen, wobei die Mikrorillen strahlenförmig zu den Ecken des Sechsecks verlaufen, sodass das Mikrorillen-Element dendritenartig angeordnete Mikrorillen nach Art eines Schneekristalls aufweist und aus sechs Mikrorillen besteht, welche sternförmig auf den Mittelpunkt des Mikrorillen-Elementes ausgerichtet sind.

Aus der US 2016/159161 A1 ist ein Fahrzeugluftreifen mit einem Laufstreifen mit Blöcken bekannt, welche jeweils mit einer zentrisch ausgebildeten, in radialer Richtung verlaufenden, kreiszylindrischen Vertiefung versehen sowie mit bezüglich der Zylinderachse der Vertiefung in Draufsicht strahlenförmig auseinanderlaufenden, innerhalb des Blocks beidseitig geschlossen endenden Einschnitten versehen sind. Der auf die Blöcke beim Abrollen des Reifes wirkende Druck soll sich dadurch gleichmäßig über den jeweiligen Block verteilen, wodurch die Bremseigenschaften auf Eis verbessert und die Gefahr von Abblätterungen des Gummimaterials ("chipping") verringert sein sollen.

Die EP 1 157 859 A1 offenbart einen Fahrzeugluftreifen mit einem Laufstreifen mit Blöcken, welche mit Einschnitten versehen sind, die, in Draufsicht betrachtet, jeweils ein innerhalb des Blocks liegendes Einschnittende oder jeweils eine innerhalb des Blocks liegende Knickstelle aufweisen. Der Fahrzeugluftreifen soll gut Eisgriffeigenschaften aufweisen.

Es ist weiterhin bekannt, dass die Segmente einer Reifenvulkanisierform Entlüftungsmittel meist in Form von kreisrunden Entlüftungskanälen oder -ventilen aufweisen, durch welche Luft aus dem Formenhohlraum nach radial außen ableitbar ist. Hierdurch ist gewährleistet, dass der vulkanisierte Reifen keine durch im Formenhohlraum verbleibende Luft bedingte Fehlstellen an seiner Oberfläche aufweist. Eine Vulkanisierform für PKW-Winterreifen weist üblicherweise zwischen 500 - 7000 dieser Entlüftungsmittel auf, welche auf der Oberfläche des Reifens - je nach Einbaulage des Entlüftungsmittels im Formsegment - einen leicht vertieften, leicht erhöhten Abdruck oder einen mit der Oberfläche des Reifens fluchtenden Abdruck hinterlassen.

Durch diese Abdrücke können die Mikrorillen in ihrer Ausbildung gestört sein, so dass die Ableitung des Wasserfilms nicht einwandfrei gewährleistet wäre.

Der Erfindung liegt daher die Aufgabe zugrunde, einen Reifen der eingangs genannten Art am Laufstreifen derart zu gestalten, dass eine Ableitung des oben erwähnten Wasserfilms über Mikrorillen verbessert ist und dass dennoch die Kontaktfläche der Profilblöcke bei dem neuen Reifen ausreichend groß ist, so dass eine gute Kraftübertragung vom Reifen auf den Untergrund sichergestellt ist.

Die gestellte Aufgabe wird erfindungsgemäß dadurch gelöst, dass jede Mikrorille eine Tiefe von 0,2 mm bis 0,9 mm aufweist, wobei nur ein einziges Mikrorillen-Element in einem Block angeordnet ist.

Es ist ein kompaktes Element aus wenigstens vier Mikrorillen nach Art eines Schneekristalles geschaffen, welches der Ableitung des oben erwähnten Wasserfilms dient, gleichzeitig aber so auf der Oberfläche des Blockes zu platzieren ist, dass die Mikrorillen des Elementes nicht auf dem Abdruck eines Entlüftungsmittels liegen und dadurch die Mikrorillen nicht in ihrer Ausformung gestört sind. Die Mikrorillen weisen eine exakte Ausformung und somit einwandfreie Funktion auf. Die Mikrorillen sind, um nach Art eines Schneekristalles anzuordnen zu sein, in ihrem Verlauf bevorzugt als Gerade ausgeführt. Zudem ist der Fahrzeugluftreifen verbessert auf die im Markt erforderlichen Fahrmanöver angepasst, weil die Mikrorillen sternförmig verlaufen und somit auch beispielsweise diagonal angeordnet sind.

Durch nur ein einziges Mikrorillen-Element in einem Block ist der beste Kompromiss zwischen Wasserablauf bei gleichzeitig ausreichend hoher Kontaktfläche des Blocks zur maximalen Kraftübertagung erhalten.

Vorteilhaft ist es, wenn das Mikrorillen-Element eine Länge aufweist, welche 50% bis 100%, vorzugsweise 70% bis 100% der Länge des Blockes entspricht. Ein solch dimensioniertes Mikrorillen-Element lässt sich auf dem Block außerhalb von Entlüftungsmittel-Abdrücken platzieren, durchtrennt aber dennoch gut den Mikrowasserfilm. Gleichzeitig ist eine ausreichend große Kontaktfläche zwischen Block und Fahrbahn für eine ausreichend und sicherheitsrelevante Kraftübertragung erhalten.

Vorteilhaft ist es, wenn das Mikrorillen-Element eine Breite aufweist, welche 30% bis 100%, vorzugsweise 30% bis 80% der Breite des Blockes entspricht. Ein solch dimensioniertes Mikrorillen-Element lässt sich auf dem Block außerhalb von Entlüftungsmittel-Abdrücken platzieren, durchtrennt aber dennoch gut den Mikrowasserfilm. Gleichzeitig ist eine ausreichend große Kontaktfläche zwischen Block und Fahrbahn für eine ausreichend und sicherheitsrelevante Kraftübertragung erhalten.

Vorteilhaft ist es, wenn in einem Block mit Mikrorillen-Element zusätzlich eine senkrecht zu den Einschnitten verlaufende Mikrorille angeordnet ist und wenn diese zusätzliche Mikrorille beabstandet von dem Mikrorillen-Element platziert ist. Somit wird die Wasserabfuhr in alle und aus allen relevanten Strömungsrichtungen gewährleistet.

Zweckmäßig ist es, wenn die Mikrorillen eines Mikrorillen-Elementes eine Breite in einem Bereich von 0,3 mm - 0,5 mm, bevorzugt eine Breite von 0,4 mm aufweisen. Dieses ist die optimale Breite, um eine ausreichende Wasserabfuhr bei ausreichender Performance-over-Lifetime zu gewährleisten. Zudem ist die zuvor genannte Breite verschleißsicher.

Zweckmäßig ist es, wenn die Mikrorillen eines Mikrorillen-Elementes eine Tiefe in einem Bereich von 0,3 mm - 0,8 mm, bevorzugt eine Tiefe von 0,5 mm aufweisen. Diese sich nicht aufgrund ihrer geringen Tiefe der beim Abrollen auftretenden Kräfte schließenden Mikrorillen können den auf der Fahrbahn entstehenden Wasserfilm besonders gut durchtrennen und aufnehmen. Weiterhin ist die vorgenannte Tiefe verschleißsicher und optimal, um eine ausreichende Wasserabfuhr bei ausreichender Performance-over-Lifetime zu gewährleisten.

Vorteilhaft ist es, wenn jedes Mikrorillen-Element aus einer geraden Anzahl an Mikrorillen besteht, welche vorzugsweise 4, 6, 8 oder 10 ist und wenn das Mikrorillen-Element vorzugsweise annähernd symmetrisch ist. Es ist ein Element geschaffen, dessen Mikrorillen in denjenigen Richtungen anzuordnen sind, welch die im Markt geforderten Fahrmanöver zu unterstützen. Somit wird die Wasserabfuhr in alle und aus allen relevanten Strömungsrichtungen gewährleistet, so dass jedes nötige und sicherheitsrelevante Fahrmanöver zu jedem Zeitpunkt durchgeführt werden kann.

In einer bestimmten Ausführung der Erfindung enden alle Mikrorillen des Mikrorillen-Elementes in dessen Mittelpunkt.

In einer anderen Ausführung der Erfindung enden nur einige Mikrorillen des Mikrorillen-Elementes in dessen Mittelpunkt, während die anderen Mikrorillen des Mikrorillen-Elementes vor dem Mittelpunkt enden und/oder zusätzliche Mikrorillen angeordnet sind, welche nicht in Richtung Mittelpunkt sondern in Richtung auf einen Punkt auf einer Mikrorille angeordnet sind.

In einer wiederum anderen Ausführung der Erfindung enden alle Mikrorillen des Mikrorillen-Elementes vor dessen Mittelpunkt. Bei dieser Ausführung wäre beispielsweise eine Anordnung des Mikrorillen-Elementes auf dem Block möglich, bei welchem der Abdruck des Entlüftungsmittels im Zentrum des Mikrorillen-Elementes liegt, ohne dass die Ausprägung der Mikrorillen durch den Abdruck gestört ist.

Erfindungsgemäß können nur eine, beide oder alle drei der vorgenannten Ausführungen an einem erfindungsgemäßen Fahrzeugluftreifen verwirklicht sein.

Zweckmäßig ist es, wenn pfeilspitzenartige Elemente an einem oder mehreren oder allen Mikrorillen eines Mikrorillen-Elementes angeordnet sind, wobei die Pfeilspitzen symmetrisch auf der Mikrorille mit Pfeilspitze zum Inneren des Mikrorillen-Elementes angeordnet sind. Somit wird die Wasserabfuhr in alle und aus allen relevanten Strömungsrichtungen gewährleistet, so dass jedes nötige und sicherheitsrelevante Fahrmanöver zu jedem Zeitpunkt durchgeführt werden kann.

Die Begriffe «Block» und «Profilblock» werden synonym verwendet.

Erfindungsgemäß ausgeführte Fahrzeugluftreifen sind insbesondere Winterreifen, inklusive Spike- und Softcompoundreifen, sowie AllSeasonReifen in Radialbauart für Personenkraftwagen, Vans oder Light-Trucks.

Weitere Merkmale, Vorteile und Einzelheiten der Erfindung werden nun anhand der Zeichnungen, die schematische Ausführungsbeispiele der Erfindung darstellen, näher beschrieben. Dabei zeigen die
Fig. 1 eine Draufsicht auf einen Profilabschnitt aus einer axial angeordneten Blockreihe des Laufstreifens eines erfindungsgemäßen Fahrzeugluftreifens und
Fig. 2 bis 5 jeweils eine Draufsicht auf ein Mikrorillen-Element, wobei die Fig. 4 eine vergrößerte Draufsicht auf das Mikrorillen-Element des Profilabschnittes der Fig. 1 zeigt.

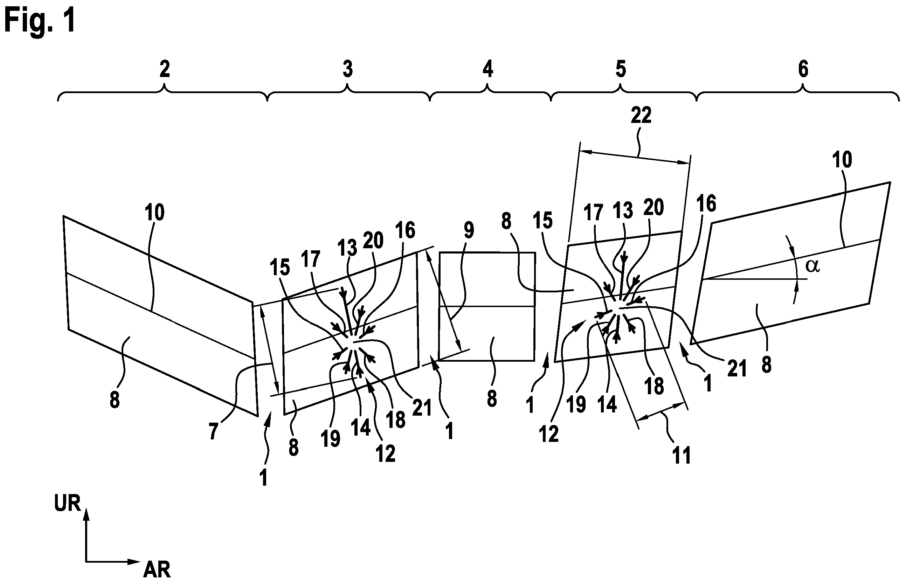

Der in Fig. 1 gezeigte Profilabschnitt aus in axialer Richtung AR nebeneinander angeordneten Blöcken weist fünf in Umfangrichtung UR umlaufende Profilbereiche auf, welche durch vier etwa in Umfangsrichtung UR verlaufende Hauptrillen 1 voneinander getrennt sind. Die Profilbereiche, von links nach rechts aufgezählt, sind: äußere Schulterblockreihe 2, Blockreihe halbe Mitte außen 3, mittlere Blockreihe 4, Blockreihe halbe Mitte innen 5, innere Schulterblockreihe 6.

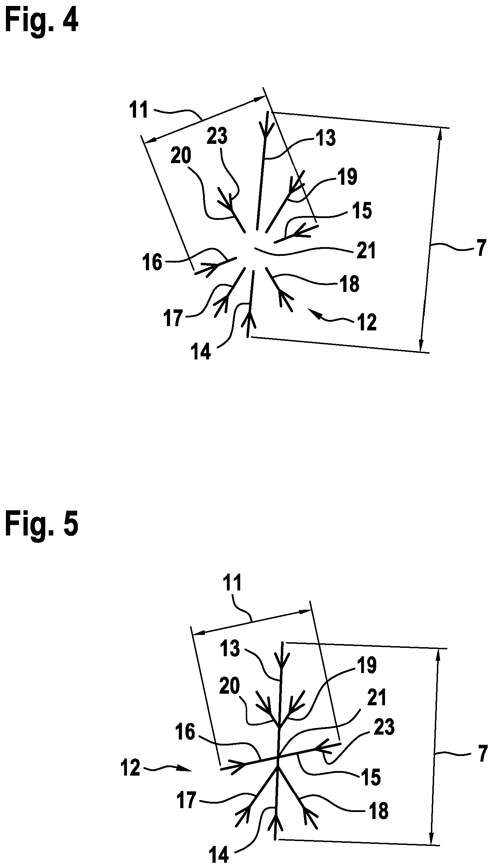

Die Blöcke 8 des Laufstreifens sind - in Draufsicht - jeweils mit zumindest einem sich unter einem Winkel α von bis zu 35° zur axialen Richtung erstreckenden Einschnitt 10 versehen, welcher eine Breite von 0,4 mm bis 0,8 mm und an seiner tiefsten Stelle eine Tiefe von mindestens 50% der Profiltiefe aufweist. Zwei der Blöcke 8 weisen Mikrorillen-Elemente 12 aus dendritenartig angeordneten Mikrorillen 13 - 20 nach Art von Schneekristallen auf, wobei jedes Mikrorillen-Element 12 aus wenigstens vier Mikrorillen 13 - 16 besteht, welche sternförmig auf den Mittelpunkt 21 des Mikrorillen-Elementes 12 ausgerichtet sind. Die das Mikrorillen-Element 12 aufweisenden Blöcke 8 weisen jeweils nur ein einziges Mikrorillen-Element 12 pro Block 8 auf. Das Mikrorillen-Element 12 weist eine Länge 7 auf, welche vorzugsweise 70% bis 100% der Länge 9 des Blockes entspricht, während dessen Breite 11 vorzugsweise 30% bis 80% der Breite 22 des Blockes entspricht. Die Mikrorillen 13 - 20 eines Mikrorillen-Elementes 12 weisen eine Breite bevorzugt von 0,4 mm und eine Tiefe bevorzugt von 0,5 mm auf. Jedes Mikrorillen-Element 12 besteht aus einer geraden Anzahl an Mikrorillen 13 - 20, welche vorzugsweise 4, 6, 8 oder 10 ist. Das Mikrorillen-Element 12 ist annähernd symmetrisch. Das in der Fig. 1 gezeigte Mikrorillen-Element ist vergrößert in der Fig. 4 gezeigt und wird dort näher beschrieben.

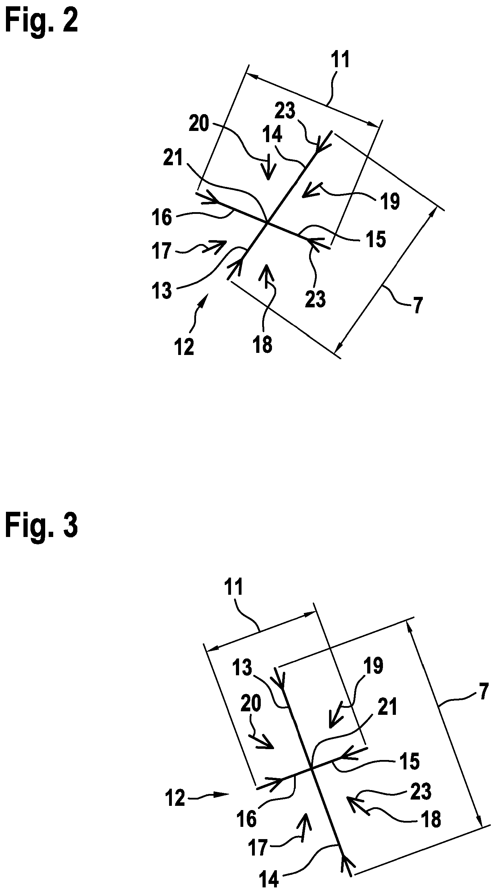

Die Fig. 2 bis 5 zeigen jeweils eine Draufsicht auf verschieden gestaltete Mikrorillen-Elemente, wobei die Fig. 4 eine vergrößerte Draufsicht des Mikrorillen-Elementes des Profilabschnittes der Fig. 1 zeigt.

In den Mikrorillen-Elementen 12 der Fig. 2, 3 und 5 enden vier Mikrorillen 13 - 16 im Mittelpunkt 21 des Mikrorillen-Elementes 12, während vier weitere Mikrorillen 17 - 20 außerhalb dieses Mittelpunktes 21 enden. Jeweils zwei der vier im Mittelpunkt 21 endenden Mikrorillen 13 - 16 fluchten miteinander, so dass je zwei miteinander fluchtende Mikrorillen 13 - 14, 15 - 16 je eine Gerade bilden. In der Fig. 4 enden alle Mikrorillen 13 - 20 außerhalb des Mittelpunktes 21, sind in ihrer Erstreckung aber auf diesen ausgerichtet. In der Fig. 5 sind die übrigen vier Mikrorillen 17 - 20 in ihrem Verlauf nicht auf den Mittelpunkt 21, sondern je zwei Mikrorillen auf einen Punkt von zwei Mikrorillen 13, 14 gerichtet, wobei diese zwei Mikrorillen 13 - 14 eine Geraden bilden. In den Fig. 2 und 3 enden die weiteren vier Mikrorillen 17 - 20 des Mikrorillen-Elementes 12 außerhalb des Mittelpunktes 21, sind aber in ihrem Verlauf auf diesen hin ausgerichtet. Die Länge 7 des Mikrorillen-Elementes 12 entspricht bevorzugt 70% bis 100% der Länge des Blockes (ein Block ist hier nicht dargestellt). Die Breite 11 des Mikrorillen-Element 12 entspricht vorzugsweise 30% bis 80% der Breite des Blockes (ein Block ist hier nicht dargestellt). Alle Mikrorillen 13 - 20 weisen pfeilspitzenartige Ausgestaltungen 23 entweder an einem Ende oder inmitten der Mikrorille 13 - 20 auf. Die Pfeilspitzen der pfeilspitzenartige Ausgestaltungen 23 sind symmetrisch auf der Mikrorille mit Pfeilspitze zum Inneren des Mikrorillen-Elementes angeordnet.

### Bezugsziffernliste

- 1: Hauptrille
- 2: äußere Schulterblockreihe
- 3: Blockreihe halbe Mitte außen
- 4: mittlere Blockreihe
- 5: Blockreihe halbe Mitte innen
- 6: innere Schulterblockreihe
- 7: Länge des Mikrorillen-Elementes
- 8: Block
- 9: Länge des Blockes
- 10: Einschnitt
- 11: Breite des Mikrorillen-Elementes
- 12: Mikrorillen-Element
- 13: Mikrorille des Mikrorillen-Elementes
- 14: Mikrorille des Mikrorillen-Elementes
- 15: Mikrorille des Mikrorillen-Elementes
- 16: Mikrorille des Mikrorillen-Elementes
- 17: Mikrorille des Mikrorillen-Elementes
- 18: Mikrorille des Mikrorillen-Elementes
- 19: Mikrorille des Mikrorillen-Elementes
- 20: Mikrorille des Mikrorillen-Elementes
- 21: Mittelpunkt des Mikrorillen-Elementes
- 22: Breite des Blockes
- 23: pfeilspitzartige Ausgestaltung

- UR: Umfangsrichtung
- AR: axiale Richtung

## Patentansprüche

1. Fahrzeugluftreifen mit einem Laufstreifen mit zu Schulterblockreihen (2, 6) gehörenden schulterseitigen Blöcken (8) und mit mittleren Blöcken (8) zwischen den schulterseitigen Blöcken (8), wobei zumindest einige der schulterseitigen Blöcke (8) und/oder zumindest einige der mittleren Blöcke (8) - jeweils in Draufsicht - mit zumindest einem sich unter einem Winkel (α) von bis zu 35° zur axialen Richtung (AR) erstreckenden Einschnitt (10) versehen sind, welcher eine Breite von 0,4 mm bis 0,8 mm und an seiner tiefsten Stelle eine Tiefe von mindestens 50% der Profiltiefe aufweist und wobei Mikrorillen (13-20) angeordnet sind, wobei eine Mikrorille (13-20) eine Breite von 0,2 mm bis 0,6 mm aufweist, wobei wenigstens einer der Blöcke (8) ein Mikrorillen-Element (12) aus wenigstens vier derart dendritenartig angeordneten Mikrorillen (13 - 20) nach Art eines Schneekristalles aufweist, dass die wenigstens vier Mikrorillen (13 - 16) sternförmig auf den Mittelpunkt (21) des Mikrorillen-Elementes (12) ausgerichtet sind,
**dadurch gekennzeichnet,**
**dass** jede Mikrorille (13-20) eine Tiefe von 0,2 mm bis 0,9 mm aufweist, wobei nur ein einziges Mikrorillen-Element (12) in einem Block (8) angeordnet ist.

2. Fahrzeugluftreifen nach Anspruch 1, **dadurch gekennzeichnet, dass** das Mikrorillen-Element (12) eine Länge (7) aufweist, welche 50% bis 100%, vorzugsweise 70% bis 100% der Länge (9) des Blockes (8) entspricht.

3. Fahrzeugluftreifen nach einem oder mehreren der vorangehenden Ansprüche, **dadurch gekennzeichnet, dass** das Mikrorillen-Element (12) eine Breite (11) aufweist, welche 30% bis 100%, vorzugsweise 30% bis 80% der Breite (22) des Blockes entspricht.

4. Fahrzeugluftreifen nach einem oder mehreren der vorangehenden Ansprüche, **dadurch gekennzeichnet, dass** zumindest in einem Block (8) mit dem Mikrorillen-Element (12) eine senkrecht zu dem Einschnitt (10) verlaufende zusätzliche Mikrorille angeordnet ist und dass diese zusätzliche Mikrorille beabstandet von dem Mikrorillen-Element (12) platziert ist.

5. Fahrzeugluftreifen nach einem oder mehreren der vorangehenden Ansprüche, **dadurch gekennzeichnet, dass** die Mikrorillen (13 - 20) eines Mikrorillen-Elementes (12) eine Breite in einem Bereich von 0,3 mm - 0,5 mm, bevorzugt eine Breite von 0,4 mm aufweisen.

6. Fahrzeugluftreifen nach einem oder mehreren der vorangehenden Ansprüche, **dadurch gekennzeichnet, dass** die Mikrorillen (13 - 20) eines Mikrorillen-Elementes (12) eine Tiefe in einem Bereich von 0,3 mm - 0,8 mm, bevorzugt eine Tiefe von 0,5 mm aufweisen.

7. Fahrzeugluftreifen nach einem oder mehreren der vorangehenden Ansprüche, **dadurch gekennzeichnet, dass** jedes Mikrorillen-Element (12) aus einer geraden Anzahl an Mikrorillen (13 - 20) besteht, welche vorzugsweise 4, 6, 8 oder 10 ist und dass das Mikrorillen-Element (12) vorzugsweise annähernd symmetrisch ist.

8. Fahrzeugluftreifen einem oder mehreren der Ansprüche 1 - 7, **dadurch gekennzeichnet, dass** alle Mikrorillen (13 - 20) des Mikrorillen-Elementes (12) in dessen Mittelpunkt (21) enden.

9. Fahrzeugluftreifen einem oder mehreren der Ansprüche 1 - 7, **dadurch gekennzeichnet, dass** nur einige Mikrorillen (13 - 16) des Mikrorillen-Elementes (12) in dessen Mittelpunkt (21) enden, während die anderen Mikrorillen (17 - 20) des Mikrorillen-Elementes (12) außerhalb dieses Mittelpunktes (21) enden und/oder zusätzliche Mikrorillen angeordnet sind, welche nicht in Richtung Mittelpunkt sondern in Richtung auf einen Punkt auf einer Mikrorille angeordnet sind.

10. Fahrzeugluftreifen einem oder mehreren der Ansprüche 1 - 7, **dadurch gekennzeichnet, dass** keine Mikrorille (13-20) des Mikrorillen-Elementes (12) in dessen Mittelpunkt (21) endet.

11. Fahrzeugluftreifen nach einem oder mehreren der vorangehenden Ansprüche, **dadurch gekennzeichnet, dass** pfeilspitzenartige Ausgestaltungen (23) an einer oder mehreren oder allen Mikrorillen (13 - 20) eines Mikrorillen-Elementes (12) angeordnet sind, wobei die Pfeilspitzen symmetrisch auf der Mikrorille (13-20) mit Pfeilspitze zum Inneren des Mikrorillen-Elementes angeordnet sind.

12. Fahrzeugluftreifen nach einem oder mehreren der vorangehenden Ansprüche, **dadurch gekennzeichnet, dass** in dem Laufstreifen nur gleichartig ausgeführte Mikrorillen-Elemente (12) angeordnet sind oder dass in dem Laufstreifen verschiedenartig ausgeführte Mikrorillen-Elemente (12) angeordnet sind.

## Claims

1. Pneumatic vehicle tyre having a tread with shoulder-side blocks (8), which belong to shoulder-block rows (2, 6), and with middle blocks (8) between the shoulder-side blocks (8), wherein at least some of the shoulder-side blocks (8) and/or at least some of the middle blocks (8) - seen in each case in plan view - are provided with at least one sipe (10) which extends at an angle (α) of up to 35° to the axial direction (AR) and which has a width of 0.4 mm to 0.8 mm and, at its lowest point, a depth of at least 50% of the profile depth, and wherein microgrooves (13-20) are arranged, wherein a microgroove (13-20) has a width of 0.2 mm to 0.6 mm, wherein at least one of the blocks (8) has a microgroove element (12) composed of at least four microgrooves (13-20) arranged in a dendritic manner similar to a snow crystal in such a way that the at least four microgrooves (13-16) are aligned in a star-shaped manner with the centre point (21) of the microgroove element (12),
**characterized**
**in that** each microgroove (13-20) has a depth of 0.2 mm to 0.9 mm, wherein only a single microgroove element (12) is arranged in a block (8).

2. Pneumatic vehicle tyre according to Claim 1, **characterized in that** the microgroove element (12) has a length (7) which corresponds to 50% to 100%, preferably 70% to 100%, of the length (9) of the block (8).

3. Pneumatic vehicle tyre according to either or both of the preceding claims, **characterized in that** the microgroove element (12) has a width (11) which corresponds to 30% to 100%, preferably 30% to 80%, of the width (22) of the block.

4. Pneumatic vehicle tyre according to one or more of the preceding claims, **characterized in that**, at least in a block (8) having the microgroove element (12), there is arranged an additional microgroove extending perpendicularly to the sipe (10), and **in that** said additional microgroove is placed spaced apart from the microgroove element (12).

5. Pneumatic vehicle tyre according to one or more of the preceding claims, **characterized in that** the microgrooves (13-20) of a microgroove element (12) have a width in a range of 0.3 mm - 0.5 mm, preferably a width of 0.4 mm.

6. Pneumatic vehicle tyre according to one or more of the preceding claims, **characterized in that** the microgrooves (13-20) of a microgroove element (12) have a depth in a range of 0.3 mm - 0.8 mm, preferably a depth of 0.5 mm.

7. Pneumatic vehicle tyre according to one or more of the preceding claims, **characterized in that** each microgroove element (12) consists of an even number of microgrooves (13-20), which is preferably 4, 6, 8 or 10, and **in that** the microgroove element (12) is preferably approximately symmetrical.

8. Pneumatic vehicle tyre according to one or more of Claims 1-7, **characterized in that** all the microgrooves (13-20) of the microgroove element (12) end at its centre point (21).

9. Pneumatic vehicle tyre according to one or more of Claims 1-7, **characterized in that** only some microgrooves (13-16) of the microgroove element (12) end at its centre point (21), while the other microgrooves (17-20) of the microgroove element (12) end outside said centre point (21) and/or there are arranged additional microgrooves which are arranged not in the direction of the centre point but in the direction of a point on a microgroove.

10. Pneumatic vehicle tyre according to one or more of Claims 1-7, **characterized in that** no microgrooves (13-20) of the microgroove element (12) end at its centre point (21).

11. Pneumatic vehicle tyre according to one or more of the preceding claims, **characterized in that** arrowhead-like formations (23) are arranged on one or more or all the microgrooves (13-20) of a microgroove element (12), wherein the arrowheads are arranged symmetrically on the microgroove (13-20) with the arrowhead towards the interior of the microgroove element.

12. Pneumatic vehicle tyre according to one or more of the preceding claims, **characterized in that** only microgroove elements (12) designed in the same way are arranged in the tread, or **in that** microgroove elements (12) designed in different ways are arranged in the tread.

## Revendications

1. Pneumatique de véhicule comportant une bande de roulement avec des blocs côté épaulement (8) appartenant à des rangées de blocs d'épaulement (2, 6) et avec des blocs centraux (8) entre les blocs côté épaulement (8), au moins certains des blocs côté épaulement (8) et/ou au moins certains des blocs centraux (8) - respectivement en vue de dessus - étant pourvus d'au moins une entaille (10) s'étendant selon un angle (α) allant jusqu'à 35° par rapport à la direction axiale (AR), qui présente une largeur de 0,4 mm à 0,8 mm et, à son point le plus profond, une profondeur d'au moins 50 % de la profondeur de profil, et des micro-rainures (13-20) étant agencées, une micro-rainure (13-20) présentant une largeur de 0,2 mm à 0,6 mm, au moins l'un des blocs (8) présentant un élément à micro-rainures (12) composé d'au moins quatre micro-rainures (13 à 20) agencées à la manière de dendrites à la manière d'un cristal de neige, de telle sorte que les au moins quatre micro-rainures (13 à 16) soient orientées en étoile sur le centre (21) de l'élément à micro-rainures (12),
**caractérisé en ce que**
chaque micro-rainure (13-20) présente une profondeur de 0,2 mm à 0,9 mm, un seul élément à micro-rainures (12) étant agencé dans un bloc (8).

2. Pneumatique de véhicule selon la revendication 1, **caractérisé en ce que** l'élément à micro-rainures (12) présente une longueur (7) qui correspond à 50 % à 100 %, de préférence à 70 % à 100 % de la longueur (9) du bloc (8).

3. Pneumatique de véhicule selon une ou plusieurs des revendications précédentes, **caractérisé en ce que** l'élément à micro-rainures (12) présente une largeur (11) qui correspond à 30 % à 100 %, de préférence à 30 % à 80 % de la largeur (22) du bloc.

4. Pneumatique de véhicule selon une ou plusieurs des revendications précédentes, **caractérisé en ce qu'**au moins dans un bloc (8) comportant l'élément à micro-rainures (12), une micro-rainure supplémentaire s'étendant perpendiculairement à l'entaille (10) est agencée et **en ce que** cette micro-rainure supplémentaire est placée à distance de l'élément à micro-rainures (12).

5. Pneumatique de véhicule selon une ou plusieurs des revendications précédentes, **caractérisé en ce que** les micro-rainures (13-20) d'un élément à micro-rainures (12) présentent une largeur dans une plage de 0,3 mm à 0,5 mm, de préférence une largeur de 0,4 mm.

6. Pneumatique de véhicule selon une ou plusieurs des revendications précédentes, **caractérisé en ce que** les micro-rainures (13-20) d'un élément à micro-rainures (12) présentent une profondeur dans une plage de 0,3 mm à 0,8 mm, de préférence une profondeur de 0,5 mm.

7. Pneumatique de véhicule selon une ou plusieurs des revendications précédentes, **caractérisé en ce que** chaque élément à micro-rainures (12) est constitué d'un nombre pair de micro-rainures (13-20), qui est de préférence 4, 6, 8 ou 10, et **en ce que** l'élément à micro-rainures (12) est de préférence approximativement symétrique.

8. Pneumatique de véhicule selon une ou plusieurs des revendications 1 à 7, **caractérisé en ce que** toutes les micro-rainures (13-20) de l'élément à micro-rainures (12) se terminent en son centre (21).

9. Pneumatique de véhicule selon une ou plusieurs des revendications 1 à 7, **caractérisé en ce que** seules certaines micro-rainures (13-16) de l'élément à micro-rainures (12) se terminent en son centre (21), tandis que les autres micro-rainures (17-20) de l'élément à micro-rainures (12) se terminent en dehors de ce centre (21) et/ou des micro-rainures supplémentaires sont agencées, qui ne sont pas orientées en direction du centre, mais en direction d'un point sur une micro-rainure.

10. Pneumatique de véhicule selon une ou plusieurs des revendications 1 à 7, **caractérisé en ce qu'**aucune micro-rainure (13-20) de l'élément à micro-rainures (12) ne se termine en son centre (21).

11. Pneumatique de véhicule selon une ou plusieurs des revendications précédentes, **caractérisé en ce que** des configurations à la manière de pointe de flèche (23) sont agencées sur une ou plusieurs ou toutes les micro-rainures (13-20) d'un élément à micro-rainures (12), les pointes de flèche étant agencées symétriquement sur la micro-rainure (13-20) avec la pointe de flèche vers l'intérieur de l'élément à micro-rainures.

12. Pneumatique de véhicule selon une ou plusieurs des revendications précédentes, **caractérisé en ce que** seuls des éléments à micro-rainures (12) de même type sont agencés dans la bande de roulement ou **en ce que** des éléments à micro-rainures (12) de types différents sont agencés dans la bande de roulement.
